# EUROPEAN PATENT APPLICATION

(11) **EP 2 645 509 A1**
(43) Date of publication of application: **02.10.2013**
(21) Application number: 12176690.1
(22) Date of filing: 17.07.2012
(51) Int. Cl.: H02G 11/02

(54) **Wire winding and unwinding device**

(30) Priority: 27.03.2012 CN 201210084841
(71) Applicant: Dongguan Top Den Electronics Company, Limited, Dongguan, Guangdong 523000 (CN); Shenzhen Lizhan Technology Co., Ltd, Shenzhen, Guangdong (CN); Chen, Yi-Chen, Taipei (TW)
(72) Inventor: Chen, Yi-Chen, Taipei (TW)
(74) Representative: Decamps, Alain René François

(57) **Abstract**

The present invention pertains to the category of winding and unwinding device technology, more particularly it relates to a wire winding and unwinding device. It comprises an upper cover (1), a lower cover (2), a spiral spring (3), a wire (4), and a rotary member (5). The upper cover (1) and the lower cover (2) can be fastened together. A movable fastener is placed between the rotary member (5) and the lower cover (2). The inner side of the lower cover (2) is fitted with a limit slot (21). The bottom of the rotary member (5) comprises a flat track allowing a movable fastener (6) to move on. As a flat track (7) is used and as there are no different height of steps placed between the inner track (71) and the outer track (72) of the flat track(7), the winding device is quiet when the movable fastener moves on the flat track; sound interference is thus eliminated and friction is reduced. Furthermore, a first positioning point (81) and a second positioning point (82) for the movable fastener are placed between the inner track (71) and the outer track (72), thus a dual positioning function is achieved. Consequently, more accurate positioning is achieved when the wire is wound or unwound and the rotary member (5) is unlikely to deflect because of long-time positioning.

## Description

### FIELD OF THE INVENTION

The present invention pertains to the category of winding and unwinding device technology, more particularly it relates to a wire winding and unwinding device.

### BACKGROUND OF THE INVENTION

Generally, earphones, mouses, mobile phones, keyboards, chargers, etc. must have data transmission lines to acquire, transmit information or supply power. Some items such as key chains, stationery, decorations, etc. are connected with simple wires for winding and unwinding. In early stages, those wires are commonly wound together or collected irregularly; therefore they are likely to twist together. It is very inconvenient for the users. For that reason, many designers started to design different structures and products to improve winding and unwinding functions of the wires. Such products mainly use a spiral spring as the main part to wind and unwind the wires spirally or annularly under the rolling force. When the wire is pulled out, it will be slightly held down under the clamping force of the spiral spring, but such holding force is easily overcome. Consequently, there exists a winding or unwinding path and a restricted pulling force; hence the wires can be easily wound or unwound.

The Chinese patent (No. 200620116285.6) discloses a single free termination wire rod coiling device and the patent (No. 200620116284.1) discloses a double-open end wire winding and unwinding device. The working principle of the devices provided by those two patents is that when the wire is pulled, a rolling ball then moves in the arc-shaped tracks of the rotator while the wire is wound or unwound. However, in the prior art, the arc-shaped tracks of the rotator in those wire winding and unwinding devices are disposed with different height of steps. When the rolling ball moves, it will produce a certain noise and the arc-shaped tracks only have a single positioning function.

### SUMMARY OF THE INVENTION

In view of the above-described problems, it is one objective of the present invention to overcome the disadvantages of the prior art by providing a wire winding and unwinding device, which has the dual positioning function and the capability to eliminate sound interference and reduce friction.

To achieve the above objective, in accordance with the present invention, there is provided a wire winding and unwinding device, comprising an upper cover, a lower cover, a spiral spring, a wire, and a rotary member used to wind the wire and press the spiral spring, in which the upper cover and the lower cover can be fastened together, the spiral spring is fixed between the upper cover and the lower cover, and the rotary member can be rotationally mounted between the upper cover and the lower cover. Between the rotary member and the lower cover is disposed with a movable fastener for positioning. The inner side of the lower cover is disposed with a limit slot matching the movable fastener. The bottom of the rotary member is disposed with a flat track allowing the movable fastener to move on. The flat track includes an inner track and an outer track. Between the inner track and the outer track is disposed with a first positioning point and a second positioning point for the movable fastener.

Preferably, the movable fastener includes a U-shaped element and a clamping element, in which the clamping element is at the center of the arc-shaped track of the U-shaped element and clamped in the flat track. The limit slot is a U-shaped groove matching the U-shaped element. The U-shaped element is placed in the limit slot to allow the rotary member to drive the clamping element to further drive the U-shaped element to move within the limit slot via the flat track.

Preferably, the thickness of the two ends of the U-shaped element is smaller than that of the central portion of the U-shaped element.

Preferably, the two ends of the U-shaped element are smooth inclined planes.

Preferably, the wire winding and unwinding device also comprises a safety clasp, allowing the rotary member to be locked manually.

Specifically, the safety clasp is used to lock the movable fastener to further lock the rotary member.

More specifically, the safety clasp is a U-shaped movable clamp and the movable fastener is locked when the U-shaped movable fastener is placed in the limit slot.

The rotary member includes an upper clamp, an intermediate clamp and a rotary body from top to bottom in turns, in which the upper clamp is arranged with a convex block to clamp the spiral spring, the intermediate clamp is arranged with a raised clamp block to wind the wire, and the flat track is at the bottom of the rotary body.

The central portion inside the lower cover is arranged with a shaft, by means of which the rotary member is rotationally mounted between the upper cover and the lower cover. The top of the shaft is disposed with an embedded groove used to clamp or fix the spiral spring.

The bottom of the rotary body forms the flat track by means of a downward-projected central convex block, a marginal convex block, a first convex block, a second convex block and a third convex block. The first convex block, the second convex block and the third convex block are around the central convex block. The first positioning point is between the first convex block and the second convex block and the second positioning point is between the second convex block and the third convex block. The marginal convex block is at the crossing point between the inner track and the outer track.

The advantages of the invention are summarized below: the flat track is used in the invention and there are no different height of steps disposed between the inner track and the outer track, it is quiet when the movable fastener moves on the flat track, thus sound interference is eliminated and friction is reduced. In addition, between the inner track and the outer track is disposed with a first positioning point and a second positioning point for the movable fastener, thus the dual positioning function is achieved. Consequently, more accurate positioning is achieved when the wire is wound or unwound and the rotary member is unlikely to deflect because of long-time positioning.

### BRIEF DESCRIPTION OF THE DRAWINGS

FIG. **1** is an exploded view of a wire winding and unwinding device of example **1;**
FIG. **2** is a structural representation of a rotary body of example **1** of the invention;
FIG. **3** is a structural representation of a movable fastener of example **1** of the invention;
FIG. **4** is a structural representation of a clamping element in a rotary member when the wire winding and unwinding device of example **1** is at the initial state;
FIGS. **5a** and **5b** are schematic diagrams of the clamping element moving in the rotary member when the wire winding and unwinding device of example **1** is from the initial state to the extended state;
FIG. **6** is a schematic diagram of the clamping element positioned at a first positioning point when the wire winding and unwinding device of example **1** is at the extended state;
FIG. 7 is a schematic diagram of the clamping element positioned at a second positioning point when the wire winding and unwinding device of example **1** is at the extended state;
FIGS. **8a** and **8b** are schematic diagrams of the clamping element moving in the rotary member when the wire winding and unwinding device of example **1** is from the initial state to the extended state;
FIGS. **9a** and **9b** are schematic diagrams of the clamping element moving in the rotary member when the wire winding and unwinding device of example **1** is at the automatic winding state;
FIG. **10** is a structural representation of a lower cover when a U-shaped movable clamp is against the movable fastener in accordance with example **2** of the invention;
FIG. **11** is a structural representation of a lower cover when the U-shaped movable clamp is placed outside the limit slot in accordance with example **2** of the invention; and
FIG. **12** is an exploded view of the wire winding and unwinding device of example **3.**

In accordance with the drawings, the wire winding and unwinding device comprises an upper cover **1,** a lower cover **2,** a limit slot **21,** a shaft **22,** an embedded groove **221,** a spiral spring **3,** a wire **4,** a rotary member **5,** an upper clamp **51,** a convex block **511,** an intermediate clamp **52,** a raised clamp block **521,** a rotary body **53,** a central convex block **531,** a marginal convex block **532,** a first convex block **533,** a second convex block **534,** a third convex block **535,** a movable fastener **6,** a U-shaped element **61,** inclined planes **611,** a clamping element **62,** a flat track 7, an inner track **71,** an outer track **72,** a first positioning point **81,** a second positioning point **82** and a safety clasp **9.**

### DETAILED DESCRIPTION OF THE EMBODIMENTS

The present invention is explained in further detail below with reference to the attached drawings.

### Example 1

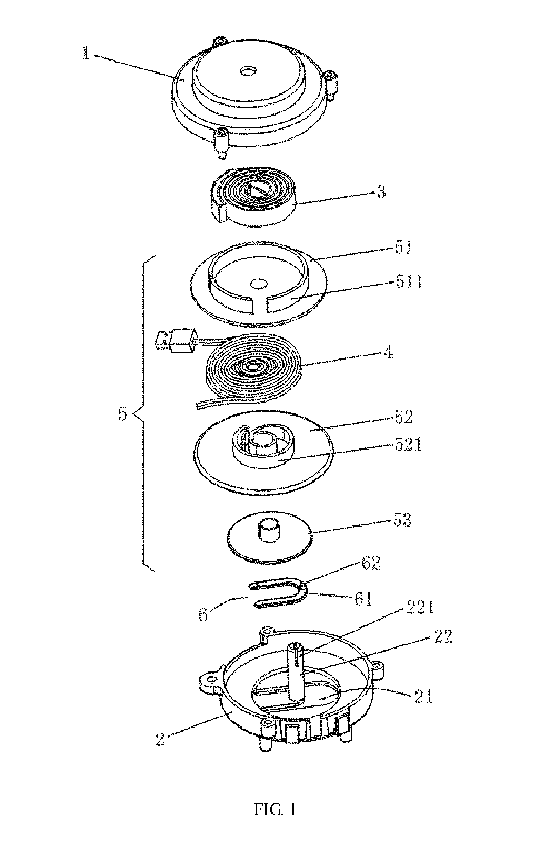

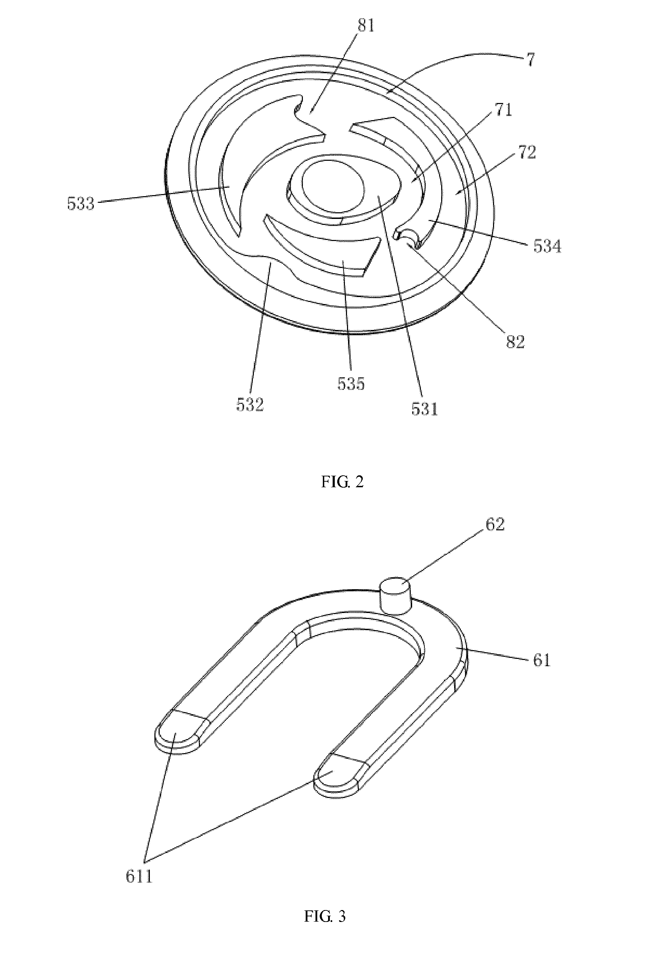

As shown in FIGS. **1-3****,** a wire winding and unwinding device, in accordance with the invention, comprises an upper cover **1,** a lower cover **2,** a spiral spring **3,** a wire **4,** and a rotary member **5** used to wind the wire **4** and press the spiral spring **3,** in which the upper cover **1** and the lower cover **2** can be fastened together, the spiral spring **3** is fixed between the upper cover **1** and the lower cover **2,** and the rotary member **5** can be rotationally mounted between the upper cover **1** and the lower cover **2.** Between the rotary member **5** and the lower cover **2** is disposed with a movable fastener **6** for positioning. The inner side of the lower cover **2** is disposed with a limit slot **21** matching the movable fastener **6.** The bottom of the rotary member **5** is disposed with a flat track **7** allowing the movable fastener **6** to move on. The flat track **7** includes an inner track **71** and an outer track **72.** Between the inner track **71** and the outer track **72** is disposed with a first positioning point **81** and a second positioning point **82** for the movable fastener **6.** When the wire **4** winds round the rotary member **5** and the movable fastener **6** is on the outer track **72** and clamped at the first positioning point **81** and the second positioning point **82** (i.e. the initial state), after the user pulls the wire **4** to make the rotary member **5** to rotate, the movable fastener **6** enters into the inner track **71** from the outer track **72** and moves within the inner track **71** all the time. When the user stops pulling the wire **4** and looses it, the movable fastener **6** will be clamped at the first positioning point **81** or the second positioning point **82** under the rolling force of the spiral spring **3,** therefore the positioning function is achieved and the user is allowed to pull out an appropriate length of the wire **4.** There are two circumstances when the user pulls the wire **4** again: one is that the user pulls out the wire **4** with a longer length, the movable fastener **6** separates from the first positioning point **81** or the second positioning point **82** and moves from the outer track **72** into the inner track **71.** Similarly, when the user stops pulling the wire **4** and looses it, the movable fastener **6** will be clamped at the first positioning point **81** or the second positioning point **82** under the rolling force of the spiral spring **3,** therefore the second-time positioning is achieved; the other one is that the user pulls out the wire **4** with a shorter length, the movable fastener **6** separates from the first positioning point **81** or the second positioning point **82** and moves on the outer track **72** before entering into the inner track **71,** the user stops pulling the wire **4** and looses it, the movable fastener **6** will move on the outer track **72** all the time under the rolling force of the spiral spring **3,** therefore the automatic winding state is achieved until the spiral spring **3** restores to its initial state.

Consequently, the flat track **7** is used in the present invention. Since there are no different height of steps disposed between the inner track **71** and the outer track **72** of the flat track **7,** it is quite when the movable fastener **6** moves on the flat track **7,** thus sound interference is eliminated. Further, compared with conventional wire winding and unwinding devices using steel balls as the clamp, the wire winding and unwinding device provided by the invention has larger clamping space between the movable fastener **6** and the flat track **7.** In addition, same materials (i.e. plastic) can be used to make the movable fastener **6** as those used to make the limit slot **21** of the flat track **7** and the lower cover **2** inside of the rotary body **53.** Consequently, the movable fastener **6** has lower friction and the service life of the whole device is prolonged.

Preferably, the movable fastener **6** includes a U-shaped element **61** and a clamping element **62,** in which the clamping element **62** is at the center of the arc-shaped track of the U-shaped element **61** and clamped in the flat track 7. In other words, the clamping element **62** is fixed at the central top of the arc-shaped track of the U-shaped element **61,** thus it is well balanced during the movement. The limit slot **21** is a U-shaped groove matching the U-shaped element **61.** The U-shaped element **61** is placed in the limit slot **21** to allow the rotary member **5** to drive the clamping element **62** to further drive the U-shaped element **61** to move within the limit slot **21** via the flat track **7.** In other words, when the clamping element **62** moves in the flat track **7,** the U-shaped element **61** also slides in the U-shaped groove. The working principle is as follows: when the wire **4** winds round the rotary member **5** and the clamping element **62** is on the outer track **72** and clamped at the first positioning point **81** or the second positioning point **82** (i.e. the initial state), after the user pulls the wire **4** to make the rotary member **5** to rotate, the clamping element **62** enters into the inner track **71** from the outer track **72** and moves within the inner track **71** all the time. When the user stops pulling the wire **4** and looses it, the clamping element **62** will be clamped at the first positioning point **81** or the second positioning point **82** under the rolling force of the spiral spring **3,** therefore the positioning function is achieved and the user is allowed to pull out an appropriate length of the wire **4.** At that point, there are two circumstances when the user pulls the wire **4** again: one is that the user pulls out the wire **4** with a longer length, the clamping element **62** separates from the first positioning point **81** or the second positioning point **82** and moves from the outer track **72** into the inner track **71.** Similarly, when the user stops pulling the wire **4** and looses it, the clamping element **62** will be clamped at the first positioning point **81** or the second positioning point **82** under the rolling force of the spiral spring **3,** therefore the second-time positioning is achieved; the other one is that the user pulls out the wire **4** with a shorter length, the clamping element **62** separates from the first positioning point **81** or the second positioning point **82** and moves on the outer track **72** before entering into the inner track **71,** the user stops pulling the wire **4** and looses it, the clamping element **62** will move on the outer track **72** all the time under the rolling force of the spiral spring **3,** therefore the automatic winding state is achieved until the spiral spring **3** restores to its initial state.

Certainly, the U-shaped element **61** is not only limited to the U-shape used in this example and it may also be the other shapes, like L or H as long as it has low friction during the slide, excellent balance and the limit slot **21** inside the lower cover **2** has sufficient space for the clamping element **62** to move.

Preferably, the thickness of the two ends of the U-shaped element **61** is smaller than that of the central portion of the U-shaped element **61.** Specifically, the two ends of the U-shaped element **61** are smooth inclined planes **611,** i.e. the top end surfaces of the two open ends of the U-shaped element **61** are the smooth inclined planes **611,** and therefore the friction with the bottom of the rotary member **5** is reduced. In addition, the length of the two ends of the U-shaped element **61** can be slightly increased so as to increase balance of the movable fastener **6** during the movement.

The rotary member **5** includes an upper clamp **51,** an intermediate clamp **52** and a rotary body **53** from top to bottom in turns, in which the upper clamp **51** is arranged with a convex block **511** to clamp the spiral spring **3,** the intermediate clamp **52** is arranged with a raised clamp block **521** to wind the wire **4,** and the flat track **7** is at the bottom of the rotary body **53.**

The central portion inside the lower cover **2** is arranged with a shaft **22,** by means of which the rotary member **5** is rotationally mounted between the upper cover **1** and the lower cover **2.** Specifically, the upper clamp **51,** the intermediate clamp **52** and the rotary body **53** are each disposed with a through hole matching the shaft **22,** allowing the upper clamp **51,** the intermediate clamp **52** and the rotary body **53** to be clamped together. The top of the shaft **22** is disposed with an embedded groove **221** used to clamp or fix the spiral spring **3,** which is fixed via the embedded groove **221** of the shaft **22.**

The bottom of the rotary body **53** forms the flat track **7** by means of a downward-projected central convex block **531,** a marginal convex block **532,** a first convex block **533,** a second convex block **534** and a third convex block **535.** The first convex block **533,** the second convex block **534** and the third convex block **535** are around the central convex block **531.** The first positioning point **81** is between the first convex block **533** and the second convex block **534** and the second positioning point **82** is between the second convex block **534** and the third convex block **535.** The marginal convex block **532** is at the crossing point between the inner track **71** and the outer track **72,** allowing the clamping element **62** to enter into the outer track **72** from the inner track **71** or into the inner track **71** from the outer track **72.**

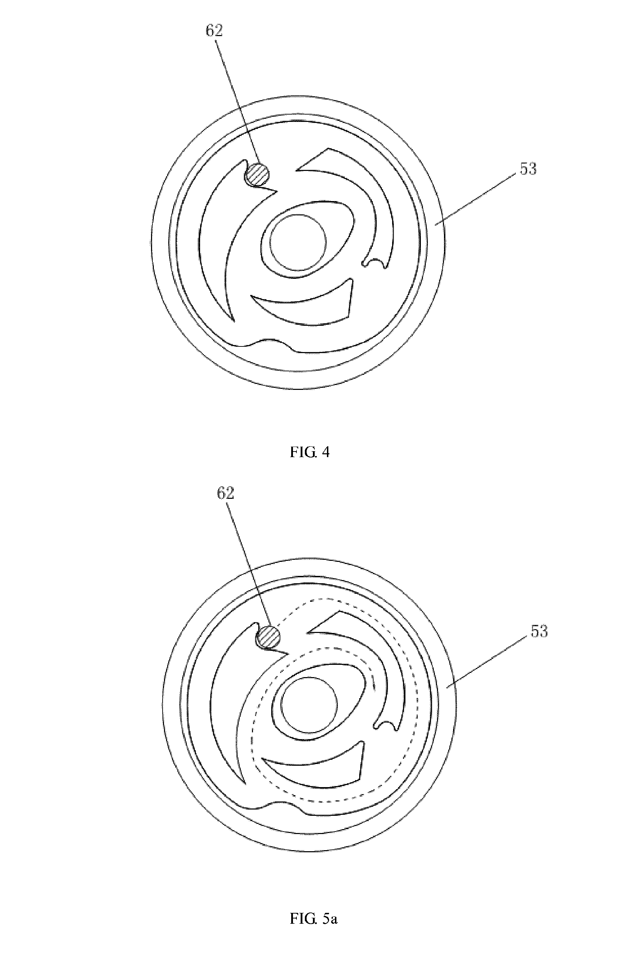

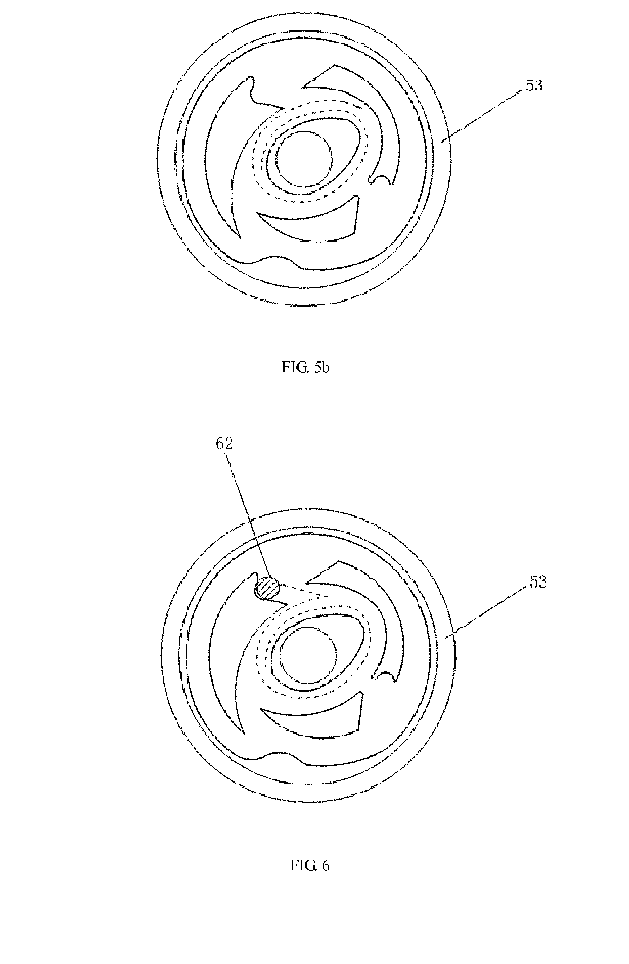

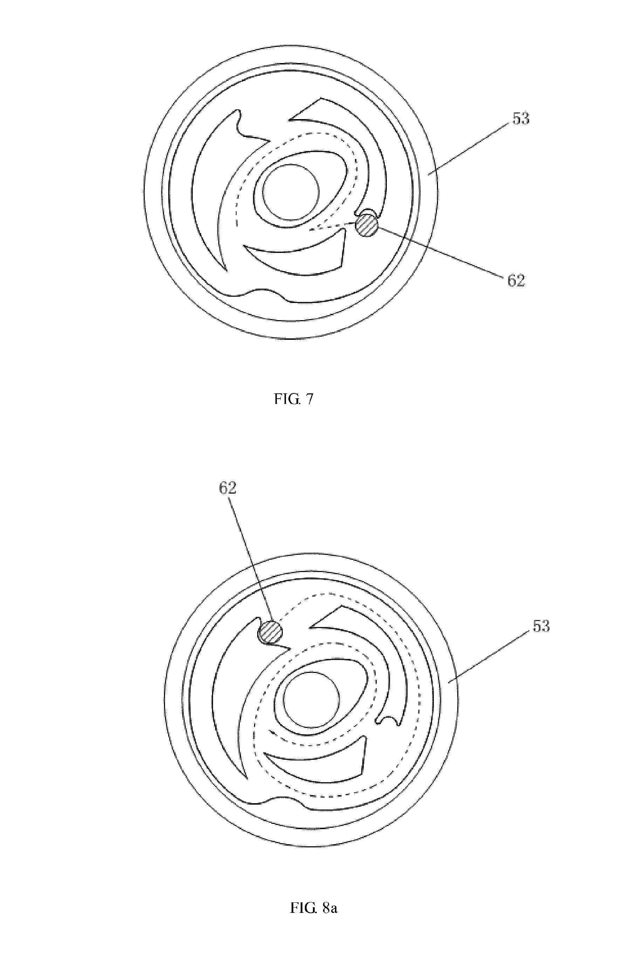

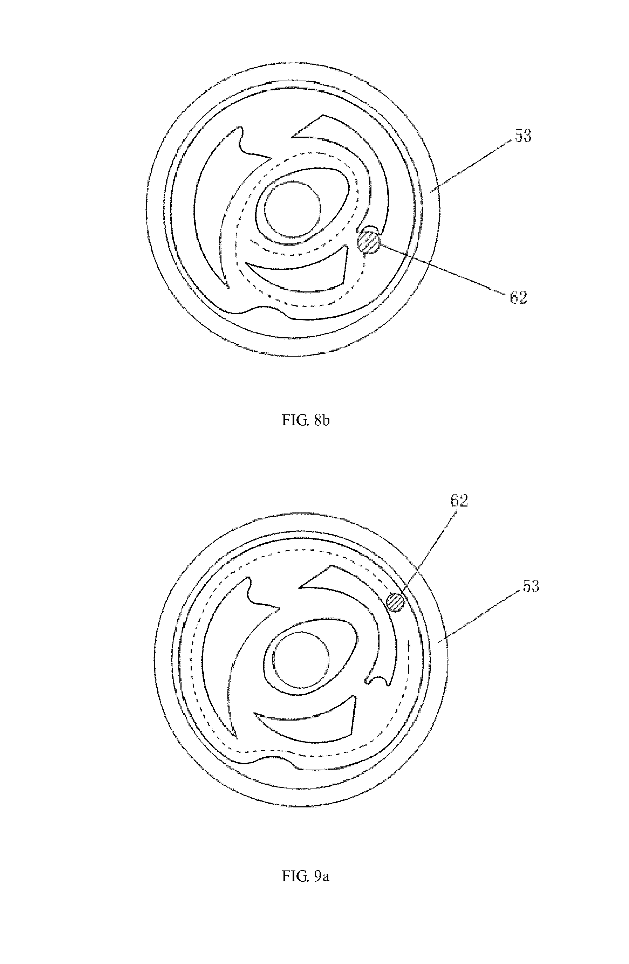

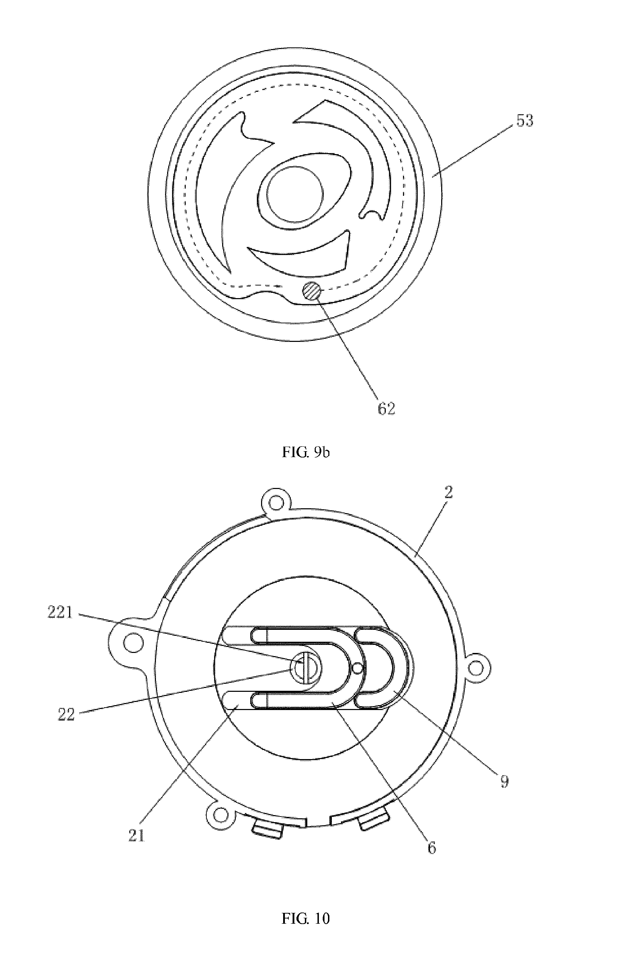

In this example, the working principle of the wire winding and unwinding device is as follows:
As shown in FIG. **4****,** it is the initial state when the wire **4** winds round the rotary member **5** and the clamping element **62** is clamped at the first positioning point **81.** At this point, when the user pulls the wire **4** to make the rotary member **5** to rotate, the rotary body **53** will rotate together to make the clamping element **62** to separate from the first positioning point **81** to enter into the outer track **72.** When the clamping element **62** moves (it is the relative movement; the rotary member **53** moves to drive the clamping element **62** to move) from the outer track **72** to the marginal convex block **532,** the clamping element **62,** under the guidance of the marginal convex block **532,** enters into the inner track **71** and moves within the inner track **71** all the time (as shown in FIGS. **5a** and **5b****),** i.e. the extended state. When the user stops pulling the wire **4** and looses it, the clamping element **62** will be clamped at the first positioning point **81** (as shown in FIG. **6****)** or the second positioning point **82** (as shown in FIG. **7****)** under the rolling force of the spiral spring **3,** thus the positioning function is achieved and the user can is allowed to pull out an appropriate length of the wire **4.** There are two circumstances when the user pulls the wire **4** again: one is that the user pulls out the wire **4** with a longer length, the clamping element **62** separates from the first positioning point **81** or the second positioning point **82** and moves from the outer track **72** into the inner track **71** (as shown in FIGS. **8a** and **8b****).** Similarly, when the user stops pulling the wire **4** and looses it, the clamping element **62** will be clamped at the first positioning point **81** or the second positioning point **82** under the rolling force of the spiral spring **3,** therefore the second-time positioning is achieved; the other one is that the user pulls out the wire **4** with a shorter length, the clamping element **62** separates from the first positioning point **81** or the second positioning point **82** and moves on the outer track **72** before entering into the inner track **71** (as shown in FIGS. **9a** and **9b****),** the user stops pulling the wire **4** and looses it, the clamping element **62** will move on the outer track **72** in the opposite direction all the time under the rolling force of the spiral spring **3,** therefore the automatic winding state is achieved until the spiral spring **3** restores to its initial state to make the wire **4** to wind round the rotary member **5** and the clamping element **62** is clamped at the first positioning point **81.** The dotted line shown in the above drawings represents the movement of the clamping element **62.**

In summary, the wire winding and unwinding device provided by the invention is applicable to the products with wires to be wound or unwound such as earphones, mouses, mobile phones, keyboards, chargers, etc. Certainly, such device can also be built in the products. As shown in FIG. **1****,** one end of the wire **4** is attached to an external interface (e.g. USB port, earphone plug, etc.) to form the wire winding and unwinding device with a single pulling end.

### Example 2

The difference between the wire winding and unwinding device described in example **2** and that described in example **1** is that the wire winding and unwinding device comprises a safety clasp **9,** allowing the rotary member **5** to be locked manually. When the user pulls out the wire **4** with a certain length, the spiral spring **3** is already under the large rolling force. The user is likely to accidentally or unexpectedly touch the pulled wire **4** or the device to make the device to be at the automatic winding state. The user may be hurt by the bounced device when the rolling force of the spiral spring **3** is suddenly released. For example, the device suddenly bounces out of the pocket to hurt the user's face. As a result, the safety clasp **9** is applied in the invention to allow the user to manually lock the rotary member **5.** Only when the user manually releases the safety clasp **9,** the device can be at the automatic winding state. It prevents the above mentioned accident from happening.

Specifically, the safety clasp **9** is used to lock the movable fastener **6** to further lock the rotary member **5.** As the movable fastener **6** has the positioning function, once it is locked, the rotary member **5** will be locked.

More specifically, in this example, as shown in FIG. **10****,** the safety clasp **9** is a U-shaped movable clamp and the movable fastener **6** is locked when the U-shaped movable clamp is placed in the limit slot **21.** As known from example **1,** when the wire winding and unwinding device is at the positioning state, the U-shaped element **61** is at the point A. If the positioning is released to allow the rotary member **5** to rotate, the U-shaped element **61** will definitely slide to the right (the direction is determined based on FIG. **10****).** Consequently, when the wire winding and unwinding device is at the positioning state, the user can place the U-shaped movable clamp in the right side (i.e. point B as shown in FIG. **10****)** of the limit slot **21** to be against the U-shaped element **61** to lock the clamping element **62** to further lock the rotary member **5.** In order to properly place the U-shaped movable clamp, the limit slot **21** can be lengthened accordingly.

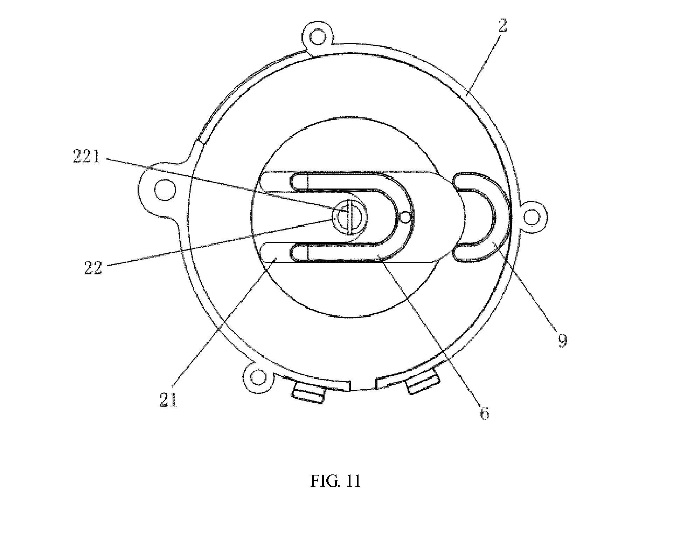

When it is not required to manually lock the rotary member **5,** the user can place the U-shaped movable clamp outside the limit slot **21** (as shown in FIG. **11****).** Of course, the movement of the U-shaped movable clamp can be achieved by the externally connected pushbutton. For example, manually push the pushbutton to place the U-shaped movable clamp in the limit slot **21** and push the pushbutton in the opposite direction to place the U-shaped movable clamp outside the limit slot **21.**

The other structures and working principle of the wire winding and unwinding device described in this example are the same as those described in example **1,** thus they are not repeated any more.

### Example 3

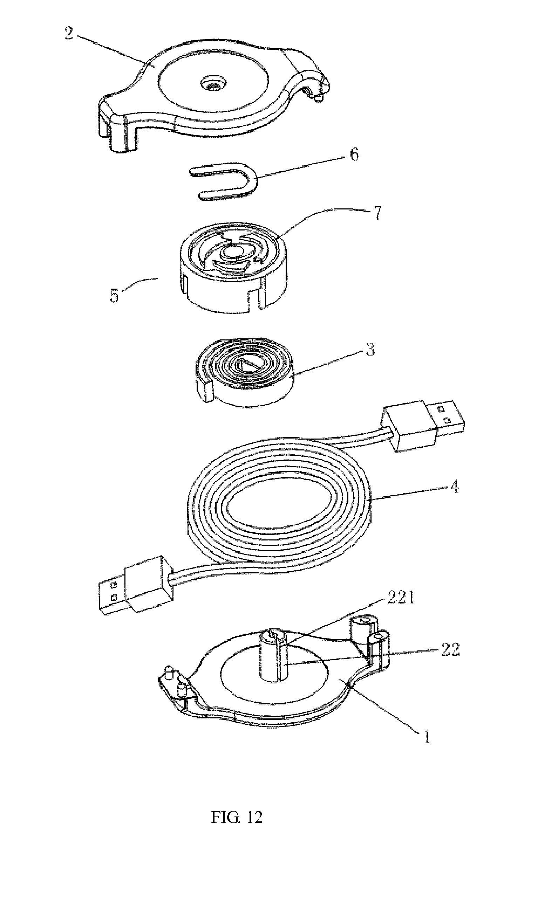

As shown in FIG. **12****,** the difference between the wire winding and unwinding device described in example **3** and that described in example **1** is that the two ends of the wire **4** are each attached to an external interface (e.g. USB port, earphone plug, etc.) to form the wire winding and unwinding device with dual pulling ends. FIG. **12** is an exploded view of the reversed wire winding and unwinding device with dual pulling ends. Specifically, the rotary member **5** is a rotator, the flat track **7** is at the bottom of the rotator, the spiral spring **3** is in the top cavity of the rotator, the wire **4** winds round the rotator, and the shaft **22** and the embedded groove **221** are at the inner side of the upper cover **1.** Obviously, wire winding and unwinding devices with a single pulling end or dual pulling ends or multiple pulling ends made according to the structure and working principle of the invention are within the scope of the invention.

The other structures and working principle of the wire winding and unwinding device described in this example are the same as those described in example **1,** thus they are not repeated any more.

It should be noted that the foregoing descriptions of the embodiments of the invention are intended to illustrate but not to limit this invention. Although the present invention has been explained in detail according to the preferred embodiments, those skilled in the related art can make various changes and modifications to the embodiments without departing from the spirit and scope of the invention.

## Claims

1. A winding and unwinding device, comprising an upper cover (1), a lower cover (2), a spiral spring (3), a wire (4), and a rotary member (5) used to wind the wire (4) and press the spiral spring(3), the upper cover (1) and the lower cover (2) being able be fastened together, the spiral spring (3) being fixed between the upper cover (1) and the lower cover (2), the rotary member (5) being rotationally mounted between the upper cover (1) and the lower cover (2), a movable fastener (6) for positioning being provided between the rotary member (5) and the lower cover (2), the inner side of the lower cover (2) being provided with a limit slot (21) matching the movable fastener (6),
**characterized in that** the bottom of the rotary member (5) comprising a flat track (7) allowing the movable fastener (6) to move on, the flat track (7) including an inner track (71) and an outer track (72); and a first positioning point (81) and a second positioning point (82) for the movable fastener (6) being placed between the inner track (71) and the outer track (72).

2. The winding and unwinding device according to claim **1, characterized in that** the movable fastener includes a U-shaped element (61) and a clamping element (62), in which the clamping element (62) is at the center of the arc-shaped track of the U-shaped element (61) and clamped in the flat track (7); the limit slot (21) being a U-shaped groove matching the U-shaped element (61), the U-shaped element (61) being placed in the limit slot (21) to allow the rotary member (5) to drive the clamping element (62) to further drive the U-shaped element (61) to move within the limit slot (21) via the flat track (7).

3. The winding and unwinding device according to claim **2, characterized in that** the thickness of the two ends of the U-shaped element (61) is smaller than that of the central portion of the U-shaped element (61).

4. The winding and unwinding device according to claim **3, characterized in that** the two ends of the U-shaped element (61) are smooth inclined planes.

5. The winding and unwinding device according to any one of claims **1 to 4, characterized in that** the wire winding and unwinding device also comprises a safety clasp (9), allowing the rotary member (5) to be locked manually.

6. The winding and unwinding device according to claim **5, characterized in that** the safety clasp (9) is used to lock the movable fastener (6) to further lock the rotary member (5).

7. The winding and unwinding device according to claim **6, characterized in that** the safety clasp (9) is a U-shaped movable clamp and the movable fastener (6) is locked when the U-shaped movable clamp is placed in the limit slot (21).

8. The winding and unwinding device according to claim any one of the preceding claims, **characterized in that** the rotary member (5) includes an upper clamp (51), an intermediate clamp (52) and a rotary body (53) respectively from top to bottom, in which the upper clamp is arranged with a convex block to clamp the spiral spring (3), the intermediate clamp (52) is arranged with a raised clamp block (521) to wind the wire (4), and the flat track (7) is at the bottom of the rotary body (53).

9. The winding and unwinding device according to any one of the preceding claims, **characterized in that** the central portion inside the lower cover (2) is arranged with a shaft (22), by means of which the rotary member (5) is rotationally mounted between the upper cover (1) and the lower cover (2) and the top of the shaft (22) is provided with an embedded groove (221) used to clamp or fix the spiral spring (3).

10. The winding and unwinding device according to any one of the preceding claims, **characterized in that** the bottom of the rotary body (53) forms the flat track (7) by means of a downward-projected central convex block (531), a marginal convex block(532), a first convex block (533), a second convex block (534) and a third convex block (535), in which the first convex block (533), the second convex block (534) and the third convex block (535) are placed around the central convex block (531), the first positioning point (81) being between the first convex block (533) and the second convex block (534), the second positioning point (82) being between the second convex block (534) and the third convex block (535), and the marginal convex block (532) being at the crossing point between the inner track (71) and the outer track (72).
